# EUROPÄISCHE PATENTANMELDUNG

(11) **EP 4 305 939 A1**
(43) Veröffentlichungstag der Anmeldung: **17.01.2024**
(21) Anmeldenummer: 23401023.9
(22) Anmeldetag: 14.07.2023
(51) Int. Cl.: A01B 17/00, A01B 73/00, A01B 49/02

(54) **BODENBEARBEITUNGSGERÄT**

(30) Priorität: 15.07.2022 DE 202022104019 U; 01.10.2022 DE 102022125442
(71) Anmelder: Lemken GmbH & Co KG, 46519 Alpen (DE)
(72) Erfinder: Schläwe, Andreas, 41352 Korschenbroich (DE); Bergemann, Christian, 46244 Bottrop (DE)

(57) **Zusammenfassung**

Es wird eine Bodenbearbeitungsgerät mit einem Transportfahrwerk vorgeschlagen, wobei ein weiteres Nachlaufgerät von einem Traktor aufgenommen wird und an diesem das Bodenbearbeitungsgerät mit dem Transportfahrwerk lenkbar und nachlaufend gekoppelt wird.

## Beschreibung

Die Erfindung betrifft ein Bodenbearbeitungsgerät gemäß dem Oberbegriff des Patentanspruches 1.

Aus dem deutschen Gebrauchsmuster DE 8 713 624 U1 ist ein Bodenbearbeitungsgerät bekannt, welches mit einer Fangvorrichtung durch einen Pflug in dessen jeweiliger Arbeitsrichtung mitgenommen wird und den durch den Pflug gewendeten Boden weiter rückverfestigt. Um das Bodenbearbeitungsgerät im öffentlichen Straßenverkehr zu transportieren, ist an einer Seite ein Dreipunktturm zum Anbau an ein Dreipunktgestänge eines Traktors vorgesehen, wie im Gebrauchsmuster DE 8 436 981 U1 in Figur 1 unten sowie in Figur 5 und 7 im oberen Figurenbereich gezeigt. Da die Geräte mit ihrer Arbeitsbreitenausrichtung quer zum Traktor angebaut werden, ist die Arbeitsbreite durch die zulässigen Transportbreiten begrenzt. Weiterhin sind aus DE 8 436 981 U1 und DE 8 230 833 U1 Nachlaufwerkzeuge bekannt, welche schwenkbar an ein Bodenbearbeitungsgerät gemäß DE 8 713 624 U1 angebaut sind. Da die Nachlaufwerkzeuge den Hubkraftbedarf eines Traktors erhöhen, welcher die Bodenbearbeitungsgeräte in der Dreipunkthydraulik aufnimmt, werden in den Gebrauchsmustern DE 8 436 981 U1 und DE 8 230 833 U1 verschiebbare Anlenkpunkte für die Nachlaufwerkzeuge vorgeschlagen, welche die Ausladung nach hinten verkürzen und somit den Hubkraftbedarf des Traktors senken. Mit zunehmender Arbeitsbreite sind daher Bodenbearbeitungsgeräte mit einer Längsfahreinrichtung versehen, wie in EP 3 262 910 A1 oder GB 2 490 342 A vorgeschlagen. Um hier auch weitere Nachlaufwerkzeuge anzubauen, werden diese mit einem separaten Fahrwerk versehen und in einer Art Gliederzug transportiert. Mit zunehmenden Arbeitsbreiten und somit Achslasten werden meist Bremsachsen und aufwändige Anhängevorrichtungen benötigt. Zudem ist die Kopplung zum Transport im Gliederzug aufwendig.

Aufgabe der Erfindung ist es, ein Bodenbearbeitungsgerät bereit zu stellen, bei welchem ein Teil des Bodenbearbeitungsgerätes mit einer Längsfahrvorrichtung im Straßenverkehr transportiert werden kann, zugleich aber ein weiterer Teil mit seinem Gewicht durch ein Zugfahrzeug getragen werden kann Diese Aufgabe wird durch die Merkmale des kennzeichnenden Teiles des Anspruches 1 gelöst.

Das erfindungsgemäße Bodenbearbeitungsgerät ist mit einer ersten und zumindest einer zweiten Bodenbearbeitungseinheit ausgestattet. Dabei weist die erste Bodenbearbeitungseinheit ein Transportfahrwerk auf. Weiterhin weist das Bodenbearbeitungsgerät zumindest eine Aufnahmevorrichtung zur Kopplung des Bodenbearbeitungsgerätes mit einem Zugfahrzeug auf. Die erste und die zweite Bodenbearbeitungseinheit sind beweglich, insbesondere seitenbeweglich zueinander angeordnet und mittels zumindest einer Zug- und Schub-Kräfte übertragenden Verbindungseinrichtung verbunden.

Kennzeichnend ist die Aufnahmevorrichtung auf der gegenüberliegenden Seite der Verbindungseinrichtung, welche die beiden Bodenbearbeitungseinheiten verbindet, an der zweiten Bodenbearbeitungseinheit angeordnet. Durch diese Anordnung ist es möglich, die zweite Bodenbearbeitungseinheit durch das Zugfahrzeug unmittelbar aus einer Arbeitsstellung aufzunehmen, ohne dass die erste oder zweite Bodenbearbeitungseinheit vor der Aufnahme durch das Zugfahrzeug neu oder anders platziert werden müssen. Weiterhin wird das Gewicht der zweiten Bodenbearbeitungseinheit sowie eine eventuelle Stützlast der ersten Bodenbearbeitungseinheit durch das Zugfahrzeug aufgenommen und entlastet das Fahrwerk der ersten Bodenbearbeitungseinheit. Somit können das Fahrwerk sowie eventuelle Rahmenbestandteile der ersten Bodenbearbeitungseinheit leichter und kostengünstiger ausgebildet werden.

In einer weiteren Erfindungsform ist die Verbindungseinrichtung als eine oder mehrere Deichseln ausgebildet, welche lösbar an einer und fest an der anderen Bodenbearbeitungseinheit angeordnet sind. Durch diese Anordnung brauchen zusätzliche Teile bei Aufnahme oder Ablage durch das Zugfahrzeug nicht bei Seite gelegt werden, sondern werden sowohl in Transport- sowie Arbeitsstellung des Bodenbearbeitungsgerätes stets und unverlierbar mitgeführt. Die lösbare Seite der Verbindungseinrichtung ist vorzugsweise als Bolzen-, Kugel- oder Hakenverbindung, insbesondere als selbsttätig oder per Fremdkraft schließende Schnellkupplung ausgebildet.

Insbesondere kann die Verbindungseinrichtung falt-, klapp- und/oder teleskopierbar ausgebildet sein. Hierdurch kann die Ausladung der Verbindungseinrichtung verkürzt werden, so dass diese im Arbeits- oder Transportstellung nicht gefährdend oder bewegungshindernd über das Bodenbearbeitungsgerät oder dessen Bodenbearbeitungseinheiten hervorstehen. In einer ergänzenden Erfindungsform weist die Aufnahmevorrichtung Verbindungspunkte zur Kopplung mit einem Aushubgestänge des Zugfahrzeuges auf. Die Verbindungspunkte sind vorzugsweise als Koppelpunkte für ein Dreipunkt-Aushubgestänge des Zugfahrzeuges ausgebildet. Dabei sind zumindest zwei Koppelpunkte zur Aufnahme in die Unterlenker des Dreipunkt-Aushubgestänges des Zugfahrzeuges vorgesehen.

Weiterhin ist das Transportfahrwerk der ersten Bodenbearbeitungseinheit als Bestandteil einer Längsfahreinrichtung des Bodenbearbeitungsgerätes ausgebildet. Überschreitet die Arbeitsbreite der ersten Bodenbearbeitungseinheit eine im Straßenverkehr zulässige Fahrzeug- oder Gerätebreite, kann diese in Verbindung mit einer Zugdeichsel sowie einem quer zur Arbeitsbreite angeordnetem Fahrwerk im Straßenverkehr längsgefahren werden. Das bedeutet, die Bodenbearbeitungseinheit wird mit dem Fahrwerk in eine Transportrichtung bewegt, welche der Quererstreckung der Bodenbearbeitungseinheit in Arbeitsstellung entspricht.

Insbesondere ist dabei die zweite Bodenbearbeitungseinheit mehrteilig und von einer großen Arbeitsbreite in eine kleinere Transportbreite verbringbar ausgebildet. Dabei werden Teile der zweiten Bodenbearbeitungseinheit von der Aufnahmevorrichtung zur Kopplung mit dem Zugfahrzeug weg aus einer breiten Arbeitsstellung nach oben oder nach hinten geklappt, um eine im Straßenverkehr zulässige Fahrzeug- oder Gerätebreite zu erzielen. Auch ein in den Bewegungen überlagertes Klappen in verwinkelt zueinander angeordneten Klappachsen ist möglich. Vorzugsweise erfolgt das Klappen durch Fremdkraft, insbesondere durch Unterstützung mit einem Energiespeicher oder einem motorischen Antrieb. An diese in der Transportbreite reduzierte zweite Bodenbearbeitungseinheit kann die erste Bodenbearbeitungseinheit mit seinem Fahrwerk nachlaufend und beweglich angehängt werden.

Weitere Einzelheiten und Vorteile des Erfindungsgegenstandes ergeben sich aus der nachfolgenden Beschreibung und den zugehörigen Zeichnungen, in denen ein Ausführungsbeispiel mit den dazu notwendigen Einzelheiten und Einzelteilen dargestellt ist. Es zeigen:
Fig.1 ein Bodenbearbeitungsgerät in perspektivischer Ansicht, welches in Arbeitsstellung hinter einem vorweglaufenden Pflug (nicht dargestellt) gezogen wird,
Fig.2 das Bodenbearbeitungsgerät in Transportposition in einer Perspektive,
Fig.3 das Bodenbearbeitungsgerät aus Fig. 2 in entgegengesetzter Perspektive hinter einem Traktor.

### Figurenbeschreibung

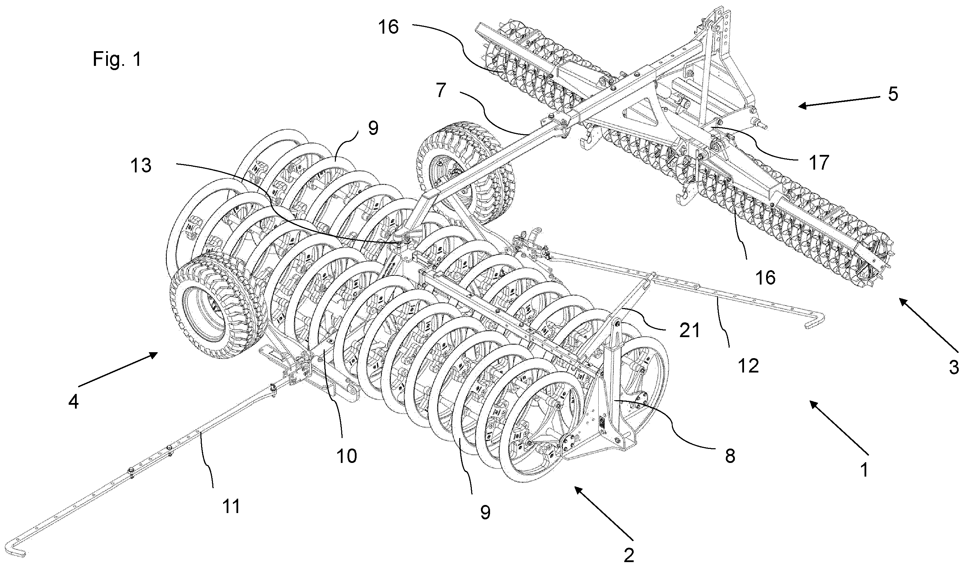

Figur 1 zeigt ein Bodenbearbeitungsgerät 1, bestehend aus einer ersten Bodenbearbeitungseinheit 2 und einer daran beweglich gekoppelten zweiten Bodenbearbeitungseinheit 3. Die erste Bodenbearbeitungseinheit 2 ist vorzugsweise als Untergrundpacker und mit einer ersten Reihe, oder wie bevorzugt dargestellt, mit zumindest einer weiteren Reihe von Bodenbearbeitungswerkzeugen 9 ausgebildet. Die Bodenbearbeitungswerkzeuge 9 sind nebeneinander angeordnet und bilden in Summe ihrer Einzelabstände die Gesamtarbeitsbreite des Bodenbearbeitungsgerätes 1. Die bevorzugt als Ringe, Rollen oder Walzenlemente ausgebildeten Bodenbearbeitungswerkzeuge 9 sind drehbar in einem Rahmen 10 der ersten Bodenbearbeitungseinheit gelagert.

Die zweite Bodenbearbeitungseinheit 3 ist vorzugsweise als Krümel- oder Zerkleinerungseinheit mit einer oder mehreren Reihen, oder wie weiter bevorzugt dargestellt, mit einer Reihe von Bodenbearbeitungswerkzeugen 16 ausgebildet.

Die bevorzugt als Ringe, Rollen oder Walzelemente ausgebildeten Bodenbearbeitungswerkzeuge 16 sind drehbar in einem Rahmen 17 der zweiten Bodenbearbeitungseinheit 3 gelagert. Alternativ oder zusätzlich können Zinken-, Messer- oder Eggenfelder fest oder beweglich am Rahmen 17 der zweiten Bodenbearbeitungseinheit 3 angeordnet werden.

Zur Fortbewegung des Bodenbearbeitungsgerätes 1 über eine zu bearbeitende Ackerfläche sind beidseitig der Bodenbearbeitungseinheit 2 auf etwa der halben Arbeitsbreite des Bodenbearbeitungsgerätes 1 zwei Mitnehmerarme 11 und 12 schwenkbar angebaut. Durch Vorbeifahrt eines Zugfahrzeuges 9 mit einem Pflug und einer davon abstehenden Zugvorrichtung kann das Bodenbearbeitungsgerätes 1 am Vorgewende über einen Mitnehmerarm 11 in der Zugvorrichtung verfangen und hinter dem Zugfahrzeug 9 bzw. dem Pflug mitgezogen werden. Dabei spurt das Bodenbearbeitungsgerät 1 in Zugrichtung ein. Über eine nicht dargestellte, bewegliche Verbindung zwischen dem ersten Mitnehmerarm 11 und dem zweiten Mitnehmerarm 12 schwenkt dieser seitlich über die Arbeitsbreite des Bodenbearbeitungsgerätes 1 aus in eine nächste Fangposition, bei welcher die Zugvorrichtung an einem weiteren Vorgewende mit dem Mitnehmerarm 12 verfängt und umgekehrt Mitnehmerarm 11 in die nächste Fangposition verschwenkt. Weitere Details des Fangvorganges gehen aus Figur 1 nebst Beschreibung des eingangs genannten Gebrauchsmusters DE 8 713 624 U1 hervor.

Über einen Verbindungspunkt 13 ist die zweite Bodenbearbeitungseinheit 3 mittels einer Verbindungseinrichtung 7 schwenkbar mit der ersten Bodenbearbeitungseinheit 2 verbunden und folgt diesem in einer nachlaufenden Bewegung. Dabei erfolgt die Schwenkbewegung der zweiten Bodenbearbeitungseinheit 3 gegenüber der ersten Bodenbearbeitungseinheit 2 bei dem zuvor beschriebenen Wendevorgang am Vorgewende auf dem Acker entgegengesetzt zur Einspurrichtung der ersten Bodenbearbeitungseinheit 2 nach dem Fangvorgang. Der Schwenkwinkel der zweiten Bodenbearbeitungseinheit 3 mit der Verbindungseinrichtung 7 um den Verbindungspunkt 13 beträgt etwa 180 Grad. Ein zur Längsfahrt der ersten Bodenbearbeitungseinheit 2 im Straßenverkehr vorgesehenes Transportfahrwerk 4 sowie eine Deichsel 8 sind in ausgehobener Position dargestellt, um den Arbeitsbetrieb der ersten Bodenbearbeitungseinheit 2 auf dem Acker zu ermöglichen.

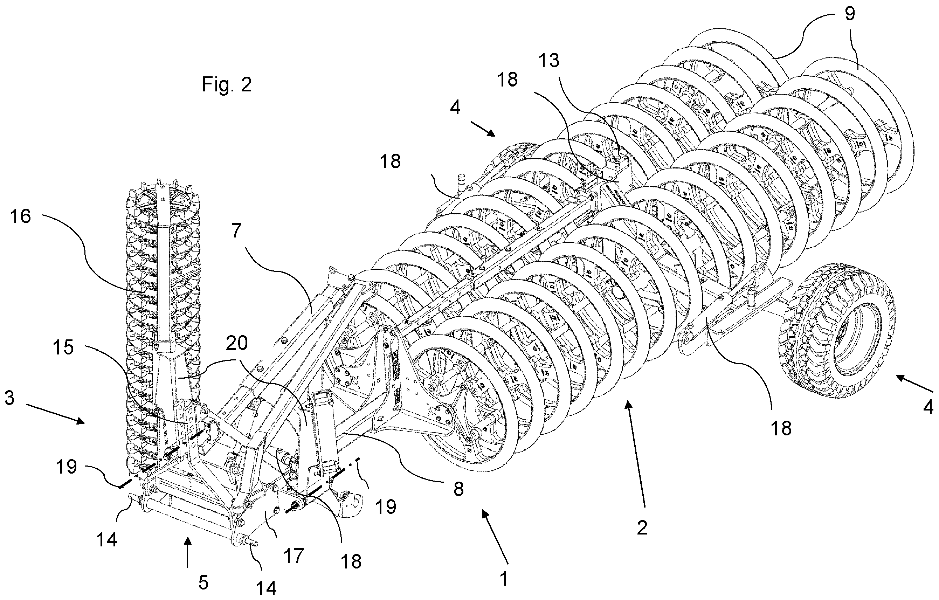

Figur 2 zeigt das Bodenbearbeitungsgerät 1 in Transportstellung. An der ersten Bodenbearbeitungseinheit 2 ist das zuvor beschriebene Fahrwerk 4 mittels zumindest eines, vorzugsweise zwei Aktoren 18 in Aushubstellung dargestellt. Das Fahrwerk 4 wird dabei relativ zum Rahmen 10 der Bodenbearbeitungseinheit 2 bewegt, um eine hinreichende Bodenfreiheit der Bodenbearbeitungswerkzeuge 9 für die Straßenfahrt zu erzielen. Die Aktoren 18 sind vorzugsweise als Hydraulikzylinder ausgebildet und werden von dem der Übersicht halber nicht dargestellten Zugfahrzeug 9 mit Druckflüssigkeit betätigt. Die Verbindungseinrichtung 7, welche die zweite Bodenbearbeitungseinheit 3 mit der ersten Bodenbearbeitungseinheit 2 über den Verbindungspunkt 13, wie weiter oben beschrieben, im Arbeitsbetrieb schwenkbar verbindet, ist für die Transportstellung gelöst und vorliegend zur Vermeidung von Kollisionen im Transportbetrieb vom Verbindungspunkt 13 gelöst und in einer verkürzten Stellung eingeklappt.

Im vorderen Bereich der ersten Bodenbearbeitungseinheit 2 ist deren Zugdeichsel 8 heruntergeklappt und an den Rahmen 17 der zweiten Bodenbearbeitungseinheit 3 in deren hinterem Bereich beweglich angehängt.

Im vorderen Bereich des Rahmens 17 der zweiten Bodenbearbeitungseinheit 3, welcher der Verbindungseinrichtung 7 sowie der ersten Bodenbearbeitungseinheit 2 gegenüber liegt, ist eine Aufnahmevorrichtung 5 mittels Verbindungspunkten 14 zur Kopplung der Unterlenker sowie ein oder mehrere Verbindungspunkte zur Kopplung eines Oberlenkers einer Dreipunkthydraulik des Zugfahrzeuges 9 angeordnet. Über diese vorzugsweise als Dreipunktturm ausgebildete Aufnahmevorrichtung 5 kann die zweiten Bodenbearbeitungseinheit 3 durch das Zugfahrzeug 9 aufgenommen und zum Transport im Straßenverkehr auf eine erforderliche Bodenfreiheit angehoben werden.

Die Bodenbearbeitungswerkzeuge 16 der zweiten Bodenbearbeitungseinheit 3 sind mittels der Ausleger 20 über einen oder mehrere Aktoren 18 in Transportstellung nach oben geklappt dargestellt. Dabei ist ein Teil der Bodenbearbeitungswerkzeuge 16 der besseren Übersicht halber ausgeblendet und lediglich der zugehörige Ausleger 20 dargestellt. Bei der Klappbewegung schwenken die Ausleger, an deren Enden die Bodenbearbeitungswerkzeuge 16 befestigt sind, um die Schwenkachsen 19 relativ zum Rahmen 17 hoch oder herunter, je nach dem, wie sie durch den als Hydraulikzylinder ausgebildeten Aktor 18 betätigt werden. Auch hier erfolgt die Versorgung mit Druckflüssigkeit über das Zugfahrzeug. Vorzugsweise sind die Aktoren 18 zum Schwenken der Ausleger 20 der zweiten Bodenbearbeitungseinheit 3 sowie zum Aushub des Fahrwerkes 4 der ersten Bodenbearbeitungseinheit 2 parallel miteinander über Leitungssysteme verbunden. Hierdurch kann der Wechsel des Bodenbearbeitungsgerätes von Transport- ins Arbeitsstellung und umgekehrt durch den Bediener des Zugfahrzeuges in einem einzigen hydraulischen Steuervorgang bequem erledigt werden. Zum Lösen der Leitungssysteme vom Zugfahrzeug sowie zwischen der ersten und zweiten Bodenbearbeitungseinheit 2, 3 sind jeweils Schnellkupplungen vorgesehen.

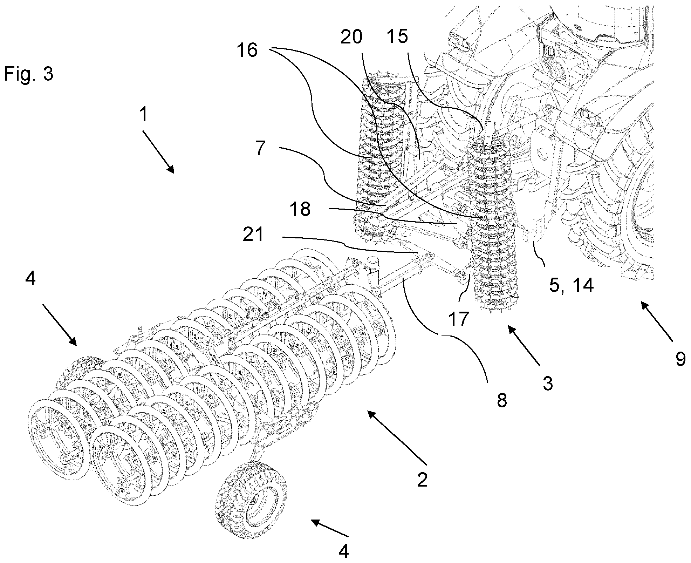

Figur 3 zeigt das Bodenbearbeitungsgerät 1 in umgekehrter Perspektive zu Figur 2, wie es zur Transportfahrt hinter einem Zugfahrzeug 9 in ausgehobener Position bewegt wird. Die Aufnahmevorrichtung 5 ist mittels der Verbindungspunkte 14 und 15 mit den Unterlenkern und dem Oberlenker der Dreipunkthydraulik des Zugfahrzeug 9 verbunden. Über die Ausleger 20 sind die

Bodenbearbeitungswerkzeuge 16 der zweiten Bodenbearbeitungseinheit 3 in eine für den Straßenverkehr zulässige Transportbreite mittels des Aktors 18 verschwenkt.

Mittels einer beweglich Koppelschiene 21, welche vorzugsweise mittels Fanghaken lösbar am hinteren Fortsatz des Rahmens 17 der zweiten Bodenbearbeitungseinheit 3 eingehängt ist, ist die Zugdeichsel 8 der durch das Fahrwerk 4 ausgehoben Bodenbearbeitungseinheit 2 beweglich und lenkbar hinter der zweiten Bodenbearbeitungseinheit 3 angehängt. Durch die lösbare Anordnung der Koppelschiene 21 bzw. der Deichsel 8 können sowohl die erste Bodenbearbeitungseinheit 2 als auch die zweite Bodenbearbeitungseinheit 3 auch solo im Straßenverkehr transportiert als auch im Arbeitsbetrieb eingesetzt werden. Insbesondere die zweite Bodenbearbeitungseinheit 3 kann durch ihre Aufnahmevorrichtung 5 einzeln für einen Solobetrieb am Zugfahrzeug 9 verbleiben und durch dieses einzeln auf einem Acker eingesetzt und bewegt werden.

Es folgen 3 Blatt mit Zeichnungen.

**BEZUGSZEICHENLISTE**

| | |
|---|---|
| 1 | Bodenbearbeitungsgerät |
| 2 | Bodenbearbeitungseinheit |
| 3 | Bodenbearbeitungseinheit |
| 4 | Transportfahrwerk |
| 5 | Aufnahmevorrichtung |
| 6 | Zugfahrzeug |
| 7 | Verbindungseinrichtung |
| 8 | Deichsel |
| 9 | Bodenbearbeitungswerkzeug |
| 10 | Rahmen |
| 11 | Mitnehmerarm |
| 12 | Mitnehmerarm |
| 13 | Verbindungspunkt |
| 14 | Verbindungspunkt |
| 15 | Verbindungspunkt |
| 16 | Bodenbearbeitungswerkzeug |
| 17 | Rahmen |
| 18 | Aktor |
| 19 | Schwenkachse |
| 20 | Ausleger |
| 21 | Koppelschiene |
| | |
| | |

## Patentansprüche

1. Bodenbearbeitungsgerät (1) mit einer ersten und zumindest einer zweiten Bodenbearbeitungseinheit (2, 3), wobei die erste Bodenbearbeitungseinheit (2) ein Transportfahrwerk (4) aufweist, wobei das Bodenbearbeitungsgerät (1) weiterhin zumindest eine Aufnahmevorrichtung (5) zur Kopplung des Bodenbearbeitungsgerät (1) mit einem Zugfahrzeug (6) aufweist, wobei die erste und die zweite Bodenbearbeitungseinheit (2, 3) beweglich, insbesondere seitenbeweglich zueinander angeordnet sind und mittels zumindest einer Zug- und Schub-Kräfte übertragenden Verbindungseinrichtung (7) verbunden sind,
**dadurch gekennzeichnet,**
**dass** die Aufnahmevorrichtung (5) auf der gegenüberliegenden Seite der Verbindungseinrichtung (7), welche die beiden Bodenbearbeitungseinheiten (2, 3) verbindet und an der zweiten Bodenbearbeitungseinrichtung (3) angeordnet ist.

2. Bodenbearbeitungsgerät nach Anspruch 1,
**dadurch gekennzeichnet,**
**dass** die Verbindungseinrichtung (7) als eine oder mehrere Deichseln (7, 8) ausgebildet ist, welche lösbar an einer und fest an der anderen Bodenbearbeitungseinheit (2, 3) angeordnet sind.

3. Bodenbearbeitungsgerät nach Anspruch 1 oder 2,
**dadurch gekennzeichnet,**
**dass** die Verbindungseinrichtung (7) falt-, klapp- und/oder telekopierbar ausgebildet ist.

4. Bodenbearbeitungsgerät nach vorstehenden Ansprüchen,
**dadurch gekennzeichnet,**
**dass** die Aufnahmevorrichtung (5) Verbindungspunkte (14, 15) zur Kopplung mit einem Aushubgestänge des Zugfahrzeuges (6) aufweist.

5. Bodenbearbeitungsgerät nach vorstehenden Ansprüchen,
**dadurch gekennzeichnet,**
**dass** das Transportfahrwerk (4) der ersten Bodenbearbeitungseinheit (2) als Bestandteil einer Längsfahreinrichtung des Bodenbearbeitungsgerätes (1) ausgebildet ist.

6. Bodenbearbeitungsgerät nach vorstehenden Ansprüchen,
**dadurch gekennzeichnet,**
**dass** die zweite Bodenbearbeitungseinheit (3) mehrteilig und von einer großen Arbeitsbreite in eine kleinere Transportbreite verbringbar ausgebildet ist.
